# DEMANDE DE BREVET EUROPEEN

(11) **EP 1 201 891 A1**
(43) Date de publication de la demande: **02.05.2002**
(21) Numéro de dépôt: 01402750.2
(22) Date de dépôt: 24.10.2001
(51) Int. Cl.: F02B 37/10, F02B 37/18, F02B 39/10

(54) **Turbocompresseur à assistance électrique**

(30) Priorité: 25.10.2000 FR 0013671
(71) Demandeur: CONSERVATOIRE NATIONAL DES ARTS ET METIERS, F-75003 Paris (FR)
(72) Inventeur: Prevond, Laurent, 77270 Villeparisis (FR); Descombes, Georges, 91800 Brunoy (FR)
(74) Mandataire: Pontet, Bernard

(57) **Abrégé**

La présente invention concerne un dispositif turbocompresseur à assistance électrique comprenant un turbocompresseur composé d'au moins une turbine et un compresseur, et une machine électrique réalisant l'assistance électrique. La machine électrique (20, 21) est du type asynchrone discoïde comprenant :
- un stator (20) disposé du côté amont ou aval du compresseur, ce stator comprenant des enroulements pour générer un champ tournant statorique et un circuit magnétique statorique recevant lesdits enroulements, et
- un rotor (19, 21) constitué par la roue du compresseur (19) réalisée dans un matériau amagnétique électriquement conducteur.

L'utilisation d'une machine asynchrone évite l'intégration d'aimants qui peuvent augmenter l'inertie de la roue du compresseur et engendrer des contraintes mécaniques.

## Description

La présente invention concerne un turbocompresseur à assistance électrique.

La présente invention concerne un dispositif turbocompresseur à assistance électrique, ainsi qu'un procédé pour la mise en oeuvre de ce dispositif. La présente invention est relative à la suralimentation d'un moteur thermique, elle est relative en particulier à la suralimentation d'un moteur thermique dans le domaine automobile au moyen d'un turbocompresseur assisté d'une machine électrique.

La suralimentation consiste à alimenter les moteurs à combustion interne avec de l'air à une pression supérieure à la pression atmosphérique, de manière à améliorer leurs performances. On connaît un système de suralimentation au moyen d'un compresseur électrique, mais l'emploi de ce système est temporaire, ce qui nécessite une modification du circuit d'admission d'air du moteur thermique.

Les systèmes actuels les plus employés dans le domaine de la suralimentation automobile sont les compresseurs volumétriques et les turbocompresseurs, avec une large prédominance pour ces derniers.

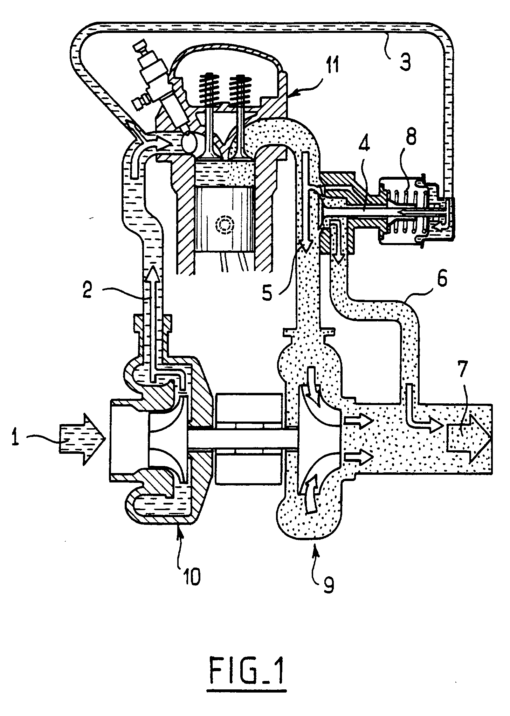

Généralement, le turbocompresseur est surdimensionné pour le moteur thermique auquel il est destiné. Ceci permet d'obtenir une pression de suralimentation plus importante vers les bas régimes du moteur. Afin de protéger le moteur thermique contre des dégradations mécaniques provoquées par des efforts excessifs, il convient de limiter la pression de suralimentation à partir d'un certain régime moteur. Comme on le voit sur le système de régulation de pression représenté sur la figure 1, l'air extérieur 1 est compressé par le compresseur 10, alimente un moteur thermique 11, puis les gaz d'échappement 7 issus de la combustion entraînent une turbine 9. Quand l'énergie disponible dans les gaz d'échappement 7 est excessive, c'est-à-dire quand la pression de suralimentation, l'air compressé 2, devient trop importante, la solution consiste en une dérivation par un circuit de dérivation 6 d'une partie des gaz d'échappement qui ne circulent plus par la turbine. L'énergie des gaz d'échappement 5 entraînant la turbine 9 baisse, ce qui permet de baisser la pression de l'air compressé 2. Le système correspond à une soupape de décharge 4 dont l'ouverture est commandée par une information de pression prise en sortie du compresseur 10 au moyen d'un circuit de décharge 3. La fermeture de la soupape 4 est assurée par un ressort 8.

Cependant, même un tel turbocompresseur ne permet pas d'obtenir une suralimentation suffisante dès les bas régimes. Pour améliorer les performances à bas régime, on utilise une suralimentation à géométrie variable, c'est-à-dire un carter de turbine qui se déforme à bas régime de façon à augmenter la vitesse des gaz d'échappement entraînant la roue de turbine. La géométrie variable permet d'améliorer les performances du moteur thermique, mais elle augmente la contre-pression à l'échappement, ce qui est néfaste à la bonne vidange des cylindres du moteur thermique et sa mise en oeuvre est difficile car les contraintes thermiques dues aux gaz d'échappement sont importantes.

On connaît également, par le document WO9816728, un turbocompresseur à assistance électrique mettant en oeuvre un moteur synchrone discoïde à aimants permanents disposés sur la partie rotorique. La roue de compresseur constitue le rotor de la machine électrique synchrone et les aimants rotoriques sont fixés sur cette roue de compresseur du côté aval, c'est-à-dire du côté de la liaison compresseur-turbine. Or, une telle disposition des aimants ramène une inertie importante au niveau de la roue de compresseur et un encombrement non négligeable. Par ailleurs, l'incrustation de ces aimants demande un usinage spécifique complexe pour palier aux contraintes mécaniques dues aux forces centrifuges lors de la rotation de la roue de compresseur.

La présente invention a pour but de remédier aux inconvénients précités en proposant une machine électrique limitant l'inertie ramenée à la roue de compresseur et présentant un encombrement réduit.

Un autre but de l'invention est de fournir un dispositif efficace dans lequel les contraintes mécaniques sont minimisées.

On atteint ces buts avec un dispositif turbocompresseur à assistance électrique comprenant un turbocompresseur composé d'au moins une turbine et un compresseur, et une machine électrique réalisant l'assistance électrique. Selon l'invention, la machine électrique est du type asynchrone discoïde et comprend :
- un stator disposé du côté amont du compresseur, côté par lequel s'effectue l'admission d'un flux de compression, ce stator comprenant des enroulements pour générer un champ tournant statorique et un circuit magnétique statorique recevant ces enroulements, et
- un rotor constitué par la roue du compresseur réalisée dans un matériau amagnétique électriquement conducteur.

Avec un tel dispositif, les performances sont optimisées puisque l'inertie ramenée à la roue du compresseur du turbocompresseur est faible.

Avec un moteur asynchrone, contrairement à l'utilisation d'un moteur synchrone par exemple, on n'utilise pas d'aimants pour constituer le rotor de la machine électrique, ce qui permet de limiter encore plus l'inertie ramenée à la roue du compresseur. En effet, dans une machine synchrone, pour résister aux hautes températures pouvant régner dans le carter du turbocompresseur, il est nécessaire d'utiliser des aimants de grande qualité conservant des caractéristiques magnétiques dans les hautes températures. Or, les aimants d'une telle qualité comportent pour la plupart une masse spécifique élevée. Ainsi, lorsque ces aimants sont intégrés dans une roue de compresseur, ils apportent une inertie importante au niveau de cette roue de compresseur.

En outre, lorsqu'on utilise directement la roue du compresseur comme rotor, on évite tout problème mécanique d'incrustation d'aimants, ces aimants étant soumis, lors de la rotation de la roue du compresseur, à des forces centrifuges importantes. Avec une machine asynchrone, le compresseur ne comporte aucune matière ajoutée, on se prémunit donc contre tout problème de contrainte mécanique.

Le fait d'avoir en tant que rotor une roue de compresseur amagnétique et conductrice contribue à une stabilisation du rotor.

Par ailleurs, la disposition du stator en amont de la roue de compresseur permet un refroidissement naturel de ce stator par l'air d'admission, un encombrement axial faible et une intégration simplifiée de la machine électrique dans le compresseur.

D'une façon générale, dans les turbocompresseurs actuels, pour les bas régimes de rotation du moteur thermique, l'énergie contenue dans les gaz d'échappement est faible. Avec la présente invention, on obtient une suralimentation considérable sur la plus grande plage de vitesses de rotation puisque la machine électrique est pilotée de façon à entraîner la roue du compresseur dans les bas régimes. On obtient une élévation de la pression de suralimentation par augmentation de la vitesse de rotation du turbocompresseur par le moteur électrique. Elle a lieu pour les bas régimes du moteur thermique où les gaz d'échappement ne sont pas suffisants pour obtenir une suralimentation conséquente. L'assistance électrique du turbocompresseur a aussi lieu lors des régimes transitoires afin de réduire le temps de réponse du système en boucle fermée, ce système en boucle fermé comprenant les éléments suivants : gaz d'échappement, turbine, compresseur, admission d'air, combustion du mélange air-carburant dans le moteur thermique, et gaz d'échappement.

Pour améliorer le couple de la machine électrique, le rotor peut comprendre en outre des éléments en matériau ferromagnétique, tel que le fer-silicium, afin de canaliser le flux magnétique traversant ce rotor. Ces éléments constituent l'inertie ramenée à la roue de compresseur. Avantageusement, pour une roue de compresseur comportant un flasque avant recouvrant les ailettes, les éléments ferromagnétiques peuvent être insérés dans ce flasque avant disposé sur les flans latéraux de la roue de compresseur.
De préférence, le stator présente une structure annulaire comportant plusieurs plots régulièrement repartis angulairement et s'étendant axialement vers la roue du compresseur. Les enroulements statoriques autour de ces plots sont alimentés en triphasé et le nombre de plots est égal à un multiple de trois. Une alimentation triphasée permet d'obtenir une machine dont les caractéristiques de couple et de rendement sont meilleures que celles d'une machine monophasée par exemple.

Selon une caractéristique avantageuse de l'invention le moteur asynchrone discoïde comprend en outre une pièce annulaire fixe disposée en aval de la roue de compresseur, en matériau ferromagnétique pour canaliser le flux magnétique traversant la roue de compresseur.

Chaque plot peut comprendre un empilement de tôles en matériau fer-silicium isolées électriquement et collées entre elles.

Dans une variante de l'invention présentant la plupart des caractéristiques avantageuses citées ci-dessus, le stator peut être disposé du côté aval du compresseur, côté de la liaison compresseur-turbine. L'entrefer de la machine électrique est donc situé entre la base de la roue de compresseur et le stator localisé entre le compresseur et la turbine. Dans cette variante, les dits éléments ferromagnétiques peuvent comprendre une rondelle ferromagnétique disposée dans une partie avale de la roue de compresseur.

Selon l'invention, la machine électrique peut être alimentée par une batterie au moyen d'un hacheur survolteur et d'un onduleur. Le dispositif prévoit un système de refroidissement par circulation forcée, par eau par exemple afin de limiter l'échauffement de la machine électrique. On peut prévoir une dérivation du circuit de refroidissement du moteur thermique.

Selon un mode de mise en oeuvre de l'invention, le turbocompresseur est adapté au moteur thermique auquel il est lié. C'est-à-dire que la machine électrique est intégrée dans un turbocompresseur dont les caractéristiques ne sont pas surdimensionnées par rapport au moteur thermique auquel il est lié, en d'autres termes la pression de suralimentation est proportionnelle au régime du moteur thermique et la pression de suralimentation maximum, atteinte pour le régime maximum, ne risque pas de dégrader le fonctionnement du moteur thermique.

Selon une variante de l'invention, le turbocompresseur, doté d'un système de régulation de pression par soupape, est surdimensionné par rapport au moteur thermique auquel il est lié. Contrairement au turbocompresseur adapté, le turbocompresseur surdimensionné possède une pression de suralimentation maximum néfaste pour le moteur thermique, mais cette pression maximum n'est jamais atteinte par adjonction d'un système de régulation de pression qui évacue le surplus de pression.

Selon une autre variante préférée de l'invention, le turbocompresseur est surdimensionné par rapport au moteur thermique auquel il est lié, et la machine électrique est capable de fonctionner en mode générateur afin de gérer le surplus de pression en freinant la turbine du turbocompresseur.

On se sert ici de la réversibilité de la machine électrique pour la faire fonctionner en génératrice, c'est-à-dire en frein. De préférence, le mode de freinage est du type hypersynchrone, contrairement au freinage à contre-courant qui génère un échauffement transitoire important de la machine électrique.

Avantageusement, la machine électrique est liée à un dispositif de commande qui gère la puissance utile fournie par cette machine électrique en fonction du régime et du type de turbocompresseur utilisé.

D'autres particularités et avantages de l'invention apparaîtront encore dans la description ci-après. Aux dessins annexés donnés à titre d'exemples non limitatifs:
- la figure 1 est une vue en coupe simplifiée d'un système conventionnel comprenant un turbocompresseur lié à un moteur thermique ainsi qu'un système de régulation de pression;
- la figure 2 est un schéma simplifié de l'intégration d'une machine électrique asynchrone dans un turbocompresseur selon l'invention;
- la figure 3 est une vue en coupe simplifiée d'une machine électrique asynchrone intégrée dans le compresseur d'un turbocompresseur selon l'invention;
- la figure 4 est une vue en coupe schématique d'un stator selon l'invention;
- la figure 5 est un graphe représentant la pression de suralimentation relative en fonction du régime moteur;
- la figure 6 est un schéma simplifié d'une intégration variante d'une machine électrique asynchrone dans un turbocompresseur selon l'invention;
- la figure 7 est une vue en coupe schématique d'une machine électrique asynchrone selon la variante illustrée sur la figuré 6;
- la figure 8 est une vue en perspective de la machine électrique selon la variante illustrée sur la figure 6; et
- la figure 9 est un graphe illustrant la puissance utile fournie par l'assistance électrique en fonction du régime moteur pour différents types de turbocompresseur.

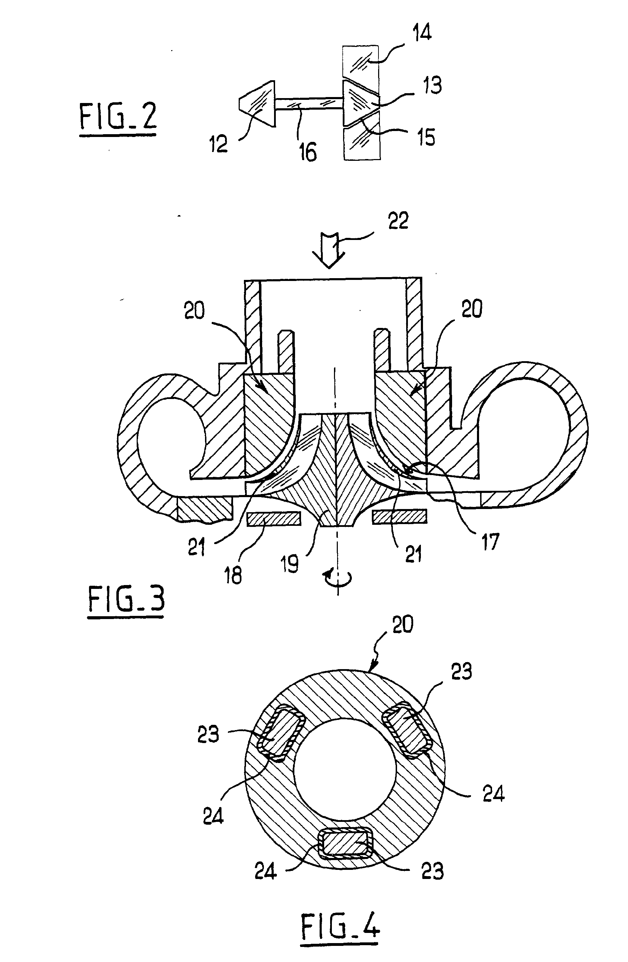

Sur la figure 2 est représenté un schéma très simplifié illustrant un turbocompresseur composé d'une turbine 12 reliée à une roue de compresseur 13, par la suite nommée compresseur, au moyen d'un arbre 16. La machine électrique réalisant l'assistance électrique sur le turbocompresseur est une machine asynchrone dont le rotor est constitué par le compresseur 13 en matériau conducteur amagnétique. Le stator 14 de la machine électrique est disposé de façon à obtenir un entrefer 15 sur les flans latéraux du rotor. L'invention est ainsi remarquable par le fait que la machine électrique est de type asynchrone, ce qui évite l'emploi d'aimants et permet l'utilisation du compresseur du turbocompresseur en tant que rotor. Comme nous le verrons plus en détail par la suite, l'entrefer 15 est le siège d'un champ tournant. Le fait de ne pas utiliser d'aimants incrustés dans le compresseur 13 comme c'est le cas dans l'art antérieur, permet de limiter l'inertie provoquée par la machine électrique sur le compresseur.

Sur les figures 3 et 4 sont représentés plus en détail la machine électrique et le compresseur 13 selon un mode de mise en oeuvre particulier. En effet, sur la figure 3 est illustré un compresseur 19, ou roue de compresseur, doté d'un flasque 17 disposé sur les ailettes du compresseur. Pour atteindre des performances optimum, on dispose des éléments magnétiques en fer-silicium 21 sur les parois internes du flasque 17. Ces éléments magnétiques constituent la partie active du rotor de la machine électrique constitué par l'ensemble du compresseur. Le stator 20 est disposé du côté amont du compresseur 19 par lequel s'effectue l'admission d'un flux de compression, généralement l'air ambiant représenté par la flèche 22. Sur la figure 4 est représenté le stator 20 selon une vue en coupe. On voit que le stator est en forme de rondelle comprenant trois plots 23 en matériau ferromagnétique disposés selon un décalage de 120° parallèlement à l'axe de rotation du compresseur. Mais, on peut également prévoir des plots selon une forme et une disposition minimisant l'entrefer, c'est-à-dire une forme arrondie imitant la courbure du flasque 17 et une disposition oblique. Chaque plot comprend un empilement de tôles en matériau fer-silicium isolées électriquement et collées entre elles. Sur chaque plot, on dispose un bobinage 24. Les trois bobinages des trois plots sont alimentés en triphasés de façon à créer un champ tournant dirigé vers les éléments magnétiques 21. Pour conserver un entrefer constant, on prévoit d'insérer dans la matière les trois plots ainsi que leurs enroulements. Pour ce faire, on réalise, dans la rondelle statorique 20, trois logements dans lesquels on insère les ensembles plots-enroulements qui affleurent la surface extérieure de la rondelle statorique.

Pour éviter une dispersion du champ tournant dans le compresseur, on dispose en aval du compresseur 19, une pièce annulaire 18 en matériau ferromagnétique. Ainsi le flux magnétique qui traverse le compresseur 19 est capté par cette pièce annulaire fixe, solidaire des parties immobiles du turbocompresseur. Elle n'ajoute aucune inertie sur le compresseur.

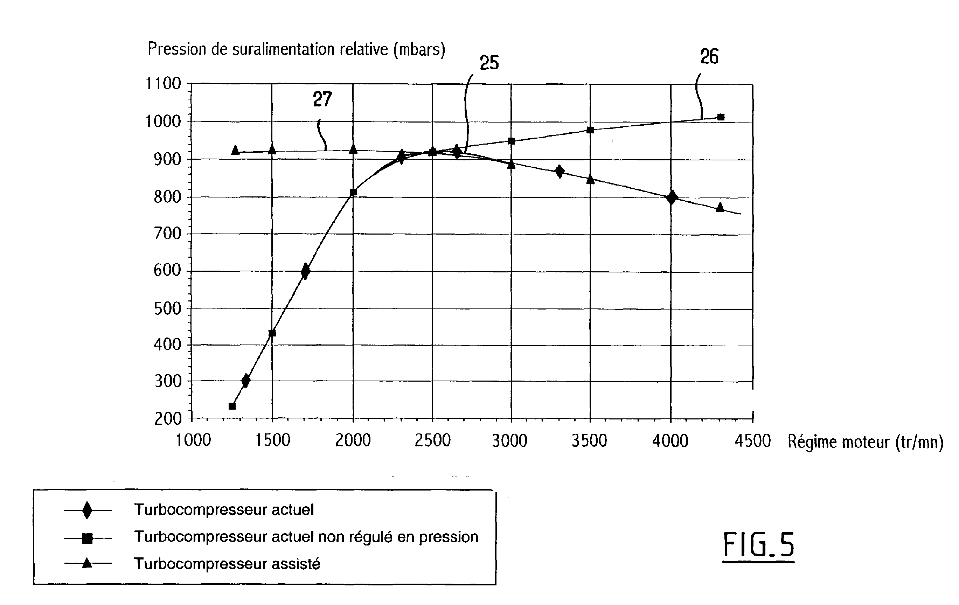

La figure 5 est un graphe représentant la pression de suralimentation relative en fonction du régime moteur. On voit que pour un turbocompresseur surdimensionné doté d'un système de régulation de pression, la courbe 25 de pression correspond à des valeurs de pression faibles progressant de façon continue jusqu'à environ 2500 tours par minute. Au-delà de 2500 tours minute, le système de régulation permet de maintenir le niveau de pression dans des valeurs acceptables par le moteur thermique. Par contre en absence de système de régulation, comme on le voit avec la courbe 26, le niveau de pression devient très élevé au-delà des 2500 tours par minute au risque de détériorer le moteur thermique. Avec un turbocompresseur assisté, l'invention permet avec la courbe 27 d'obtenir un niveau de pression en bas régime (inférieur à 2500 tours minute) supérieur à celui du turbocompresseur surdimensionné et un comportement identique au turbocompresseur surdimensionné doté du système de régulation de pression pour un régime moteur au-delà des 2500 tours par minute. Cependant, pour des raisons de pompage en bas régime, le niveau de pression obtenu en bas régime avec le turbocompresseur assisté selon l'invention est inférieur à 900 mbars mais reste tout de même largement supérieur à celui du turbocompresseur surdimensionné.

Avantageusement, le turbocompresseur assisté selon l'invention ne comprend pas le système de régulation de pression. Ainsi, pour gérer la surpression au-delà des 2500 tours par minute, c'est-à-dire éviter le décalage de la courbe 26, la machine électrique fonctionne en mode générateur de façon à freiner la turbine en récupérant de l'énergie électrique.

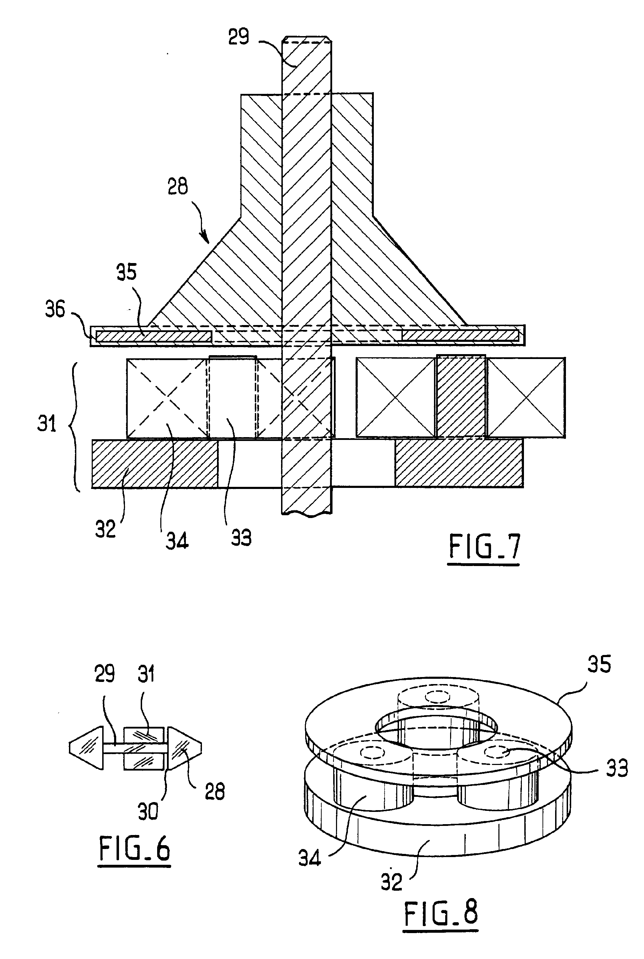

Sur la figure 6, on voit un schéma simplifié d'un turbocompresseur assisté électriquement selon une variante de l'invention. L'entrefer 30 de la machine électrique asynchrone est situé entre une base de la roue de compresseur 28 et un stator 31 disposé fixe autour de l'arbre 29. La roue de compresseur 28 constitue toujours le rotor de la machine électrique. Le champ magnétique crée par le stator 31 parallèlement à l'arbre 29 agit sur la base de la roue de compresseur 28.

La figure 7 illustre l'intégration de la machine électrique dans le turbocompresseur. Le stator 31 et le compresseur ou rotor 28 tournent autour de l'arbre 29 du turbocompresseur. Le stator 31 comprend trois éléments, une semelle 32 en matériau ferro-magnétique tel que le fer-silicium, trois plots 33 en matériau fer-silicium, et trois bobinages 34 autour des trois plots. Ces bobinages alimentés en triphasé génère des lignes de champ tournant qui sont destinés à induire des courants dans la roue de compresseur. La semelle 32 permet de canaliser et de refermer les lignes de champ tournant. Dans cette variante de l'invention, la base 36 de la roue de compresseur comprend une rondelle magnétique 35 en matériau ferromagnétique tel que le fer-silicium par exemple. Cette rondelle 35 peut être moulée dans la base 36 comme sur la figure 7 ou alors collée sur la surface externe de cette base. Elle est handicapante par l'inertie qu'elle rajoute au rotor, mais elle permet de limiter la force magnéto-motrice nécessaire à la magnétisation du circuit magnétique, donc la quantité de courant absorbé par la machine, ceci pour une valeur donnée d'induction magnétique au niveau de la roue de compression.

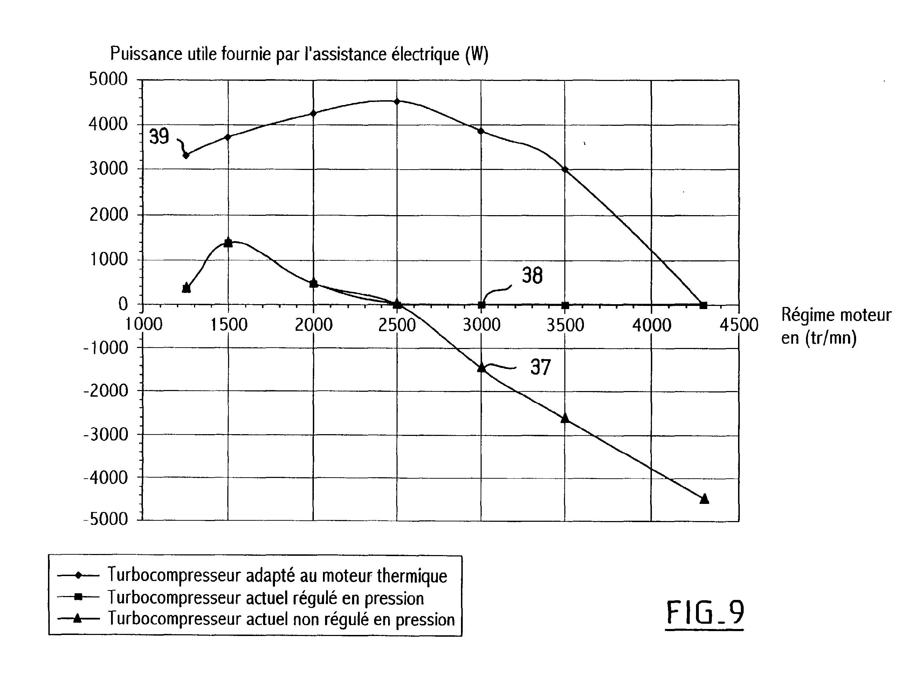

La machine électrique asynchrone est représentée plus en détail selon une vue en perspective sur la figure 8. On voit que les trois plots 33 et bobinages 34 sont régulièrement repartis sur la semelle 32. La rondelle 35 disposée au dessus des plots 33 est apte à capter la quasi totalité du champ tournant crée par les bobinages 34.

Le turbocompresseur utilisé est destiné à suralimenter un moteur thermique Diesel de 2.2 litres de cylindrée. L'assistance est réalisé avec une machine électrique de 3.5*10³ Watt de puissance utile pour une rotation de 145*10³ tours par minute.

Sur la figure 9 est représentée une courbe 39 de puissance utile fournie par l'assistance électrique dans le cas où l'assistance s'applique à un turbocompresseur adapté au moteur thermique, c'est-à-dire non surdimensionné. On voit que la machine électrique fournit constamment une puissance utile qui atteint un maximum de 4500 W à 2500 tours minute. Pour éviter une sollicitation permanente de la machine électrique, il existe la solution d'une assistance sur un turbocompresseur surdimensionné avec système de régulation de pression conformément à la courbe 38. Dans ce cas, la machine électrique fonctionne en mode moteur jusqu'à environ 2500 tours par minute. Au-delà de cette valeur, la machine électrique est au repos. Toutefois, on peut judicieusement se passer du système de régulation de pression en réalisant tout de même l'assistance sur un turbocompresseur surdimensionné. Dans ce dernier cas, pour éviter les surpressions (voir courbe 26 de la figure 5), on prévoit de faire fonctionner la machine électrique en mode générateur au-delà des 2500 tours par minute. Comme on le voit avec la courbe 37 sur la figure 9, au-delà des 2500 tours par minute la puissance utile fournie est négative. Ce fonctionnement à pour effet de ralentir la rotation du compresseur, donc d'éliminer la surpression. La machine joue le rôle d'un frein. En outre, on récupère de l'énergie qui peut être utilisée pour charger d'éventuelles batteries.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif turbocompresseur à assistance électrique comprenant un turbocompresseur composé d'au moins une turbine (12) et un compresseur (13, 19, 28), et une machine électrique réalisant ladite assistance électrique, **caractérisé en ce que** la machine électrique est du type asynchrone discoïde comprenant
- un stator (14, 20, 31) comprenant des enroulements (24) pour générer un champ tournant statorique et un circuit magnétique statorique (23) recevant lesdits enroulements, et
- un rotor constitué par la roue du compresseur (19) réalisée dans un matériau amagnétique électriquement conducteur.

2. Dispositif selon la revendication 1, **caractérisé en ce que** le stator (31) est disposé du côté aval du compresseur, côté de la liaison compresseur-turbine.

3. Dispositif selon la revendication 1, **caractérisé en ce que** le stator (14) est disposé du côté amont du compresseur, côté par lequel s'effectue l'admission d'un flux de compression.

4. Dispositif selon la revendication 3, caractérisé en que le moteur asynchrone discoïde comprend en outre une pièce annulaire fixe (18) disposée en aval de la roue de compresseur, en matériau ferromagnétique pour canaliser le flux magnétique traversant la roue de compresseur.

5. Dispositif selon l'une quelconque des revendications précédentes, **caractérisé en ce que** le rotor comprend en outre des éléments (21, 35) en matériau ferromagnétique pour canaliser le flux magnétique traversant ledit rotor.

6. Dispositif selon la revendication 5, **caractérisé en ce que** pour une roue de compresseur comportant un flasque (17) avant recouvrant les ailettes, les éléments ferromagnétiques (21) sont insérés dans ledit flasque avant.

7. Dispositif selon les revendications 2 et 5, **caractérisé en ce que** lesdits éléments ferromagnétiques comprennent une rondelle ferromagnétique (35) disposée dans une partie avale de la roue de compresseur.

8. Dispositif selon l'une quelconque des revendications précédentes, **caractérisé en ce que** le stator présente une structure annulaire comportant plusieurs plots (23, 33) régulièrement repartis angulairement et s'étendant axialement vers la roue du compresseur.

9. Dispositif selon la revendication 8, **caractérisé en ce que** le nombre de plots est égal à un multiple de trois.

10. Dispositif selon l'une quelconque des revendications précédentes, **caractérisé en ce que** les enroulements (24, 34) statoriques sont alimentés en triphasé.

11. Dispositif selon l'une quelconque des revendications 4 à 7, **caractérisé en ce que** le matériau ferro-magnétique comprend du fer silicium.

12. Dispositif selon l'une des revendications 8 ou 9, **caractérisé en ce que** chaque plot comprend un empilement de tôles en matériau fer-silicium isolées électriquement et collées entre elles.

13. Dispositif selon l'une quelconque des revendications précédentes, **caractérisé en ce que** la machine électrique est alimentée par une batterie au moyen d'un hacheur survolteur et d'un onduleur.

14. Dispositif selon l'une quelconque des revendications précédentes, **caractérisé en ce qu'**il comprend en outre un système de refroidissement par eau.

15. Dispositif selon l'une quelconque des revendications précédentes, **caractérisé en ce que** le turbocompresseur est adapté au moteur thermique auquel il est lié.

16. Dispositif selon l'une quelconque des revendications 1 à 14, **caractérisé en ce que** le turbocompresseur, doté d'un système de régulation de pression par soupape, est surdimensionné par rapport au moteur thermique auquel il est lié.

17. Dispositif selon l'une quelconque des revendications 1 à 14, **caractérisé en ce que** le turbocompresseur est surdimensionné par rapport au moteur thermique auquel il est lié, et **en ce que** la machine électrique est capable de fonctionner en mode générateur afin de gérer le surplus de pression en freinant la turbine du turbocompresseur.

18. Dispositif selon la revendication 17, **caractérisé en ce que** le freinage de la machine électrique est du type hypersynchrone.
